Europäisches Patentamt

European Patent Office

Office européen des brevets

(19)

(11) Veröffentlichungsnummer: **0 182 986**
**B1**

# (12) EUROPÄISCHE PATENTSCHRIFT

(45) Veröffentlichungstag der Patentschrift:
**17.11.88**

(21) Anmeldenummer: **85111194.8**

(22) Anmeldetag: **05.09.85**

(51) Int. Cl.⁴: **B 25 B 23/147**

(54) **Kraftgetriebene Schraubvorrichtung mit variabler Drehmomenteinstellung.**

(30) Priorität: **30.11.84 DE 3443670**

(43) Veröffentlichungstag der Anmeldung:
**04.06.86 Patentblatt 86/23**

(45) Bekanntmachung des Hinweises auf die Patenterteilung:
**17.11.88 Patentblatt 88/46**

(84) Benannte Vertragsstaaten:
**CH DE FR GB IT LI NL SE**

(56) Entgegenhaltungen:
**DE - A - 2 156 012**
**DE - A - 2 731 090**
**DE - A - 3 146 494**
**GB - A - 2 096 510**

(73) Patentinhaber: **C. & E. FEIN GmbH & Co.,**
**Leuschnerstrasse 41-47, D-7000 Stuttgart 1 (DE)**

(72) Erfinder: **Die Erfinder haben auf ihre Nennung verzichtet**

(74) Vertreter: **Hoeger, Stellrecht & Partner,**
**Uhlandstrasse 14c, D-7000 Stuttgart 1 (DE)**

## Beschreibung

Die Erfindung betrifft eine kraftgetriebene Schraubvorrichtung mit variabler Drehmomenteinstellung, insbesondere ein elektrisches Handwerkzeug, mit einem Antrieb, einer Arbeitsspindel und einem zwischen diesen vorgesehenen Getriebe, welches ein Getriebegehäuse sowie eine in zwei im Abstand voneinander angeordneten Lagern aufgenommene Zwischenwelle umfasst, wobei die Zwischenwelle durch das erste, radial zu ihrer Längsachse gegen eine Gegenkraft verschiebbare Lager von einer Ausgangsstellung in eine ein Sensorelement einer Drehmomentabschaltung betätigende Abschaltstellung bewegbar ist.

Eine derartige Vorrichtung ist aus der DE-A-2731090 bekannt. Bei dieser wird bei einem ansteigenden Gegendrehmoment an der Arbeitsspindel die Zwischenwelle um die Achse der Arbeitsspindel herum geschwenkt. Diese Schwenkbewegung wird von einem Zahnrad abgenommen und über eine Welle mit einem Hebel auf eine Druckmessdose übertragen, die bei entsprechend hohem Druck über ein Steuergerät eine Kupplung betätigt, welche den Antrieb von dem Getriebe abkoppelt.

Diese Maschine hat den Nachteil, dass sie durch die zwischen Antrieb und Getriebe einzubauende Kupplung in Längsrichtung der Arbeitsspindel sehr gross baut, was insbesondere bei einem elektrischen Handwerkzeug problematisch ist, da es nicht kompakt genug ausgeführt sein kann. Ferner hat die drehbare Lagerung der Zwischenwelle den Nachteil, dass sie sehr aufwendig ist, da sie so ausgeführt sein muss, dass sie sämtliche auf die Zwischenwelle wirkenden Drehmomente aufnimmt. Ausserdem ist für die Schwenkbewegung der Zwischenwelle ein grosser Raum notwendig. Schliesslich hat auch noch die Abnahme der Schwenkbewegung über ein Zahnrad den Nachteil, dass ebenfalls wiederum sehr viel Raum für die Übertragung auf die als Sensorelement dienende Druckmessdose benötigt wird. Damit ist der Aufbau der Maschine mit Drehmomentabschaltung gemäss der DE-A-2731090 wegen seiner Grossvolumigkeit und aufwendigen Bauweise, insbesondere für elektrische Handwerkzeuge, nicht geeignet.

Der Erfindung liegt daher die Aufgabe zugrunde, eine Schraubvorrichtung der eingangs beschriebenen Art derart zu verbessern, dass diese möglichst kompakt und einfach aufgebaut ist.

Diese Aufgabe wird bei einer Schraubvorrichtung der eingangs beschriebenen Art erfindungsgemäss dadurch gelöst, dass das zweite Lager radial zur Längsachse der Zwischenwelle unbeweglich in dem Getriebegehäuse verankert ist, so dass die Zwischenwelle in ihrer Abschaltstellung gegenüber der Ausgangsstellung um das zweite Lager verkippt ist, und dass das Sensorelement bei der Verkippbewegung der Zwischenwelle ein Signal zur Motorabschaltung abgibt.

Weitere vorteilhafte Merkmale sind Gegenstand der Unteransprüche 2 bis 7.

Die erfindungsgemässe Schraubvorrichtung mit den kennzeichnenden Merkmalen des Hauptanspruchs hat demgegenüber den Vorteil, dass an einer Lagerstelle der Zwischenwelle ein einstellbarer Sensor vorgesehen ist, der das radiale Ausweichen, das in Abhängigkeit von dem an der Antriebswelle erzeugten Drehmoment entsteht, der die Zwischenwelle erfasst und ein Signal zum Abschalten des Motors erzeugt. Als Sensor kann sowohl ein herkömmlicher Schalter als auch ein Piezo-Element verwendet werden. Bei der Verwendung eines Piezo-Elements könnte auf eine mechanische Verstelleinrichtung verzichtet werden. Die Drehmomenteinstellung könnte dann über ein elektronisches Bauteil erfolgen.

Die mechanische Verstellung der Drehmomentabschaltung erfolgt über einen Anschlagstift und eine Rändelschraube.

Diese Anordnung erlaubt ein einfaches Verstellen der Andrückkraft auf den Anschlagstift, in dem die Rändelschraube eine Feder gegen den Anschlagstift, drückt. Diese Kraft kann dadurch verändert werden, dass die Rändelschraube in einen Grundkörper ein- oder ausgeschraubt wird. Der Anschlagstift versucht, das Lager einer Getriebewelle in seiner Funktionsstellung zu halten. Wird durch erhöhtes Drehmoment die Kraft in axialer Richtung im Lager erhöht und übersteigt den Druck des Anschlagstifts, so bewegt sich die Getriebewelle in radialer Richtung, was ein Signal durch den Schalter auslöst. Durch das Ansprechen des Schalters wird der Motor abgeschaltet und gleichzeitig kurzgeschlossen, wodurch ein über den Abschaltzeitpunkt hinaus wirkendes Restträgheitsmoment reduziert wird. Indem die Axialquerkraft in einer Lagerstelle des Getriebes ausgenützt wird, um ein zum Drehmoment analoges Signal zu erhalten, entfällt die Notwendigkeit, eine Drehmoment-Kupplung vorzusehen. Dadurch ergibt sich eine geringere Baugrösse der Schraubvorrichtung.

Im Vergleich zur bekannten motorstromabhängigen Abschaltung bietet diese Vorrichtung den Vorteil, dass die Trägheitsmomente der mit hoher Drehzahl rotierenden Bauteile (Anker, Vorgelegewelle), welche den Hauptanteil des Gesamtträgheitsmomentes erzeugen, im Abschaltvorgang mit einbezogen werden und so die Abschaltgenauigkeit wesentlich erhöht wird.

Ein Ausführungsbeispiel der Erfindung ist anhand von Zeichnungen dargestellt und in der nachfolgenden Beschreibung näher erläutert.

Es zeigen:

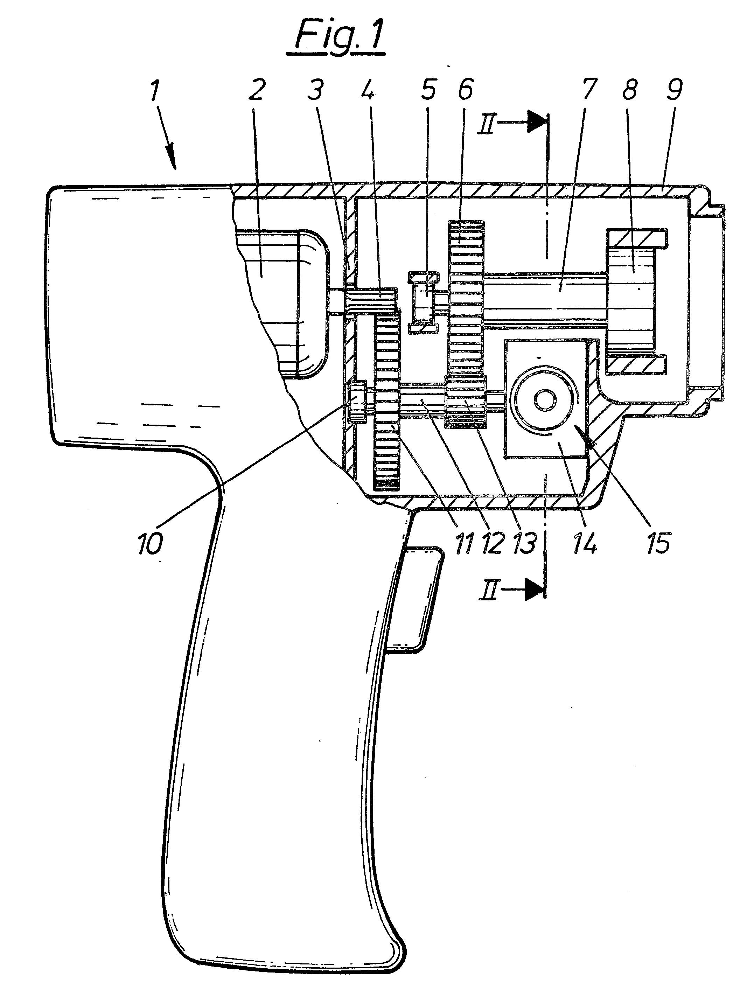

Fig. 1 eine Seitenansicht einer teilweise geschnittenen Schraubvorrichtung;

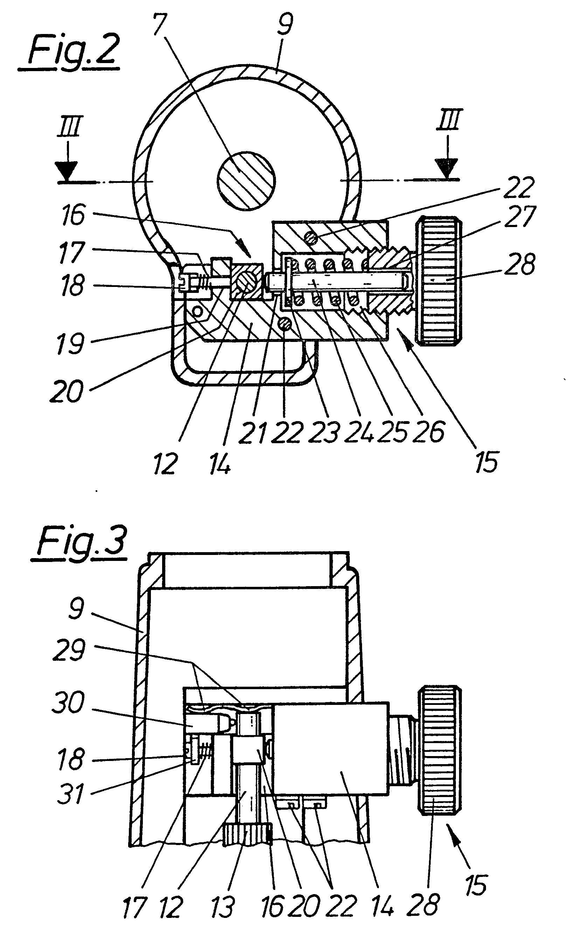

Fig. 2 einen Schnitt nach der Linie II–II in Fig. 1;

Fig. 3 einen Schnitt nach der Linie III–III in Fig. 2.

Das in den Zeichnungen dargestellte Ausführungsbeispiel stellt einen elektromotorisch angetriebenen Schrauber 1 dar. Angetrieben wird der Schrauber 1 durch einen Elektromotor 2. Zwischen Motorraum und Getrieberaum befindet sich eine Zwischenwand 3. Über ein Ritzel 4 und ein Zahnrad 11 wird die Antriebsbewegung des Motors 2 auf eine Vorgelegewelle 12 übertragen. Ein weiterers, auf der Vorgelegewelle 12 befestigtes Zahnrad 13 überträgt die Antriebsbewegung auf ein Zahnrad 6, das auf einer Antriebswelle 7 befestigt ist. Die Antriebswelle 7 ist in den Lagern 5 und 8 gelagert. Das am Lager 8 liegende Ende der Antriebswelle 7 ist in bekannter Weise so ausgestaltet, dass ein Werkzeug (z.B. eine Schrauberklinge) befestigt werden kann. Diese Ausgestaltung ist aus Vereinfachungsgründen in der Zeichnung nicht dargestellt.

Die Lagerung der Vorgelegewelle 12 wird durch ein in der Zwischenwand 3 angeordnetes Lager 10 und am anderen Ende durch ein Gleitlager 20 erreicht. Das Gleitlager 20 ist, nicht wie die anderen Lager 5, 8 und 10, im Getriebegehäuse 9 oder der Zwischenwand 3 verankert, sondern liegt an den Wandungen der Nut 16 einer Verstelleinrichtung 15 an. Die Verstelleinrichtung 15 besteht aus einem Grundkörper 14, der durch Schrauben 22 mit dem Gehäuse 9 verbunden ist. In den Seitenwänden der Nut 16 befinden sich Bohrungen 19 und 21. Durch die Bohrung 21 ist ein Anschlagstift 24 gesteckt, der einen Bund 23 aufweist. Eine Feder 25 drückt den Bund 23 gegen die stirnseitige Wand eines Hohlraums 26. Die Feder 23 stützt sich am anderen Ende an der Stirnfläche einer Rändelschraube 28 ab. Die Rändelschraube 28 ist in den Hohlraum 26 eingeschraubt, mit ihr kann man die Anpresskraft der Feder 25 gegen den Bund 23 einstellen, indem man die Rändelschraube 28 in den Hohlraum 26 ein- und ausschraubt. Der Anschlagstift 24, der einerseits in der Bohrung 21 geführt ist, reicht mit dem, jenseits des Bundes 23 gelegenen Ende, durch die Feder 25 in eine Bohrung 27 der Rändelschraube 28.

In dem Schenkel der Nut 16, in dem sich die Bohrung 19 befindet, ist eine Schraube 18 eingeschraubt. Mit ihr ist auf der, der Nut 16 abgekehrten Seite des Schenkels ein Träger 31 federnd an der Verstelleinrichtung 15 befestigt. Der Träger 31 hält einen Schalter 30, der über seinem Schaltkontakt mit der Vorgelegewelle 12 in Berührung steht. Durch eine Feder 17 wird der Träger 31 gegen den Kopf der Schraube 28 gedrückt, somit kann der Schalter 30 durch die Schraube 18 justiert werden.

Eine Blattfeder 29, die fest am Grundkörper 14 fixiert ist, dient als Axiallager der Vorgelegewelle 12 und zur Fixierung des Schalters 30. Zur axialen Lagerung der Vorgelegewelle 12 greift die Blattfeder 29 mit einer Erhebung in die ausgehöhlte Stirnfläche der Vorgelegewelle 12.

Wird das Drehmoment erhöht, dann steigt auch das Bestreben der Vorgelegewelle 12 an, in radialer Richtung auszuweichen. Durch die Nut 16 ist die Ausweichrichtung vorgegeben. Das Gleitlager 20 drückt somit auf den Anschlagstift 24. Hat das Drehmoment einen Wert erreicht, der so hoch ist, dass eine radiale Kraft im Gleitlager 20 entsteht, die grösser ist als die eingestellte Kraft der Feder 25, weicht die Vorgelegewelle 12 aus ihrer Normallage aus. Der Schalter 30 kann dann ein Signal abgeben.

Mit Hilfe der Schraube 18 kann eine Feineinstellung des Schaltzeitpunkts des Schalters 30 vorgenommen werden. Die Einstellung des Drehmoments erfolgt über die Rändelschraube 28. Wird die Rändelschraube 28 tiefer in den Grundkörper 14 eingeschraubt, erhöht sich die Anpresskraft der Feder 25, was einem höheren Drehmoment-Wert entspricht. Beim Herausschrauben der Rändelschraube 28 aus dem Grundkörper 14 wird ein niederer Drehmoment-Wert erzielt. Dieser Sachverhalt ist vorteilhaft durch eine Skala am Getriebegehäuse dargestellt.

Es ist auch denkbar, dass statt der dargestellten Verstelleinrichtung 15, die stufenlos arbeitet, eine Einrichtung mit Rastmarken vorgesehen ist, bei der für das Drehmoment Festwerte vorgesehen sind. Eine Feinabstimmung könnte dann über die Schraube 18 und den Schalter 30 vorgenommen werden. Dies hätte den Vorteil, dass sich das eingestellte Drehmoment nicht von selbst verstellt. Es lässt sich aber auch denken, dass an der dargestellten analogen Drehmoment-Verstellung eine bekannte Fixiereinrichtung angebracht ist.

Es ist weiterhin denkbar, dass das Vorgelegewellenlager 20 pendelnd an einer Torsionsstabfeder befestigt ist, die parallel zur Maschinenantriebswelle angeordnet ist.

An einem Ausleger am hinteren Ende des Torsionsstabes ist ein Nocken angebracht, der in eine exzentrische Bohrung eines Verstellrings eingreift. Durch das Verdrehen des Verstellrings erfolgt die Vorspannung des Torsionsstabes. Dadurch kann ein höheres Drehmoment bis zum Ansprechen des Sensorelements erzielt werden.

**Patentansprüche**

1. Kraftgetriebene Schraubvorrichtung mit variabler Drehmomenteinstellung, insbesondere elektrisches Handwerkzeug, mit einem Antrieb (2), einer Arbeitsspindel (7) und einem zwischen diesen vorgesehenen Getriebe, welches ein Getriebegehäuse (9) sowie eine in zwei im Abstand voneinander angeordneten Lagern (10, 20) aufgenommene Zwischenwelle (12) umfasst, wobei die Zwischenwelle (12) durch das erste, radial zu ihrer Längsachse gegen eine Gegenkraft verschiebbare Lager (20) von einer Ausgangsstellung in eine ein Sensorelement (30) einer Drehmomentabschaltung betätigende Abschaltstellung bewegbar ist, dadurch gekennzeichnet, dass das zweite Lager (10) radial zur Längsachse der Zwischenwelle (12) unbeweglich in dem Getriebegehäuse (9) verankert ist, so dass die Zwischenwelle (12) in ihrer Abschaltstellung gegenüber der Ausgangsstellung um das zweite Lager (10) verkippt ist und dass das Sensorelement (30) bei der Verkippbewegung der Zwischenwelle (12) ein Signal zur Motorabschaltung abgibt.

2. Schraubvorrichtung nach Anspruch 1, dadurch gekennzeichnet, dass die Bewegung des ersten Lagers (20) radial zur Längsachse der Zwischenwelle (12) durch eine Verstelleinrichtung (15) begrenzt ist.

3. Schraubvorrichtung nach Anspruch 2, dadurch gekennzeichnet, dass das erste Lager (20) in einer Nut (16) der Verstelleinrichtung (15) verschieblich angeordnet ist und in der Ausgangsstellung an einer Seitenwand der Nut (16) anliegt.

4. Schraubvorrichtung nach einem der Ansprüche 1 bis 3, dadurch gekennzeichnet, dass das Sensorelement ein Schalter (30) ist.

5. Schraubvorrichtung nach einem der Ansprüche 1 bis 3, dadurch gekennzeichnet, dass das Sensorelement ein Piezogeber ist.

6. Schraubvorrichtung nach einem der Ansprüche 1 bis 3, dadurch gekennzeichnet, dass das Sensorelement ein Hallsensor ist.

7. Schraubvorrichtung nach einem der Ansprüche 1 bis 3, dadurch gekennzeichnet, dass das Sensorelement ein induktiver oder kapazitiver Wegsensor ist.

## Claims

1. A power-driven screw device with variable torque adjustment, in particular an electric hand tool, having a drive (2), a work spindle (7), and a transmission therebetween comprising a gearbox (9), and an intermediate shaft (12) arranged in two spaced bearings (10, 20), the intermediate shaft (12) being movable by the first bearing (20) which is displaceable radially to the longitudinal axis of the shaft against an opposing force, from an initial position into a switchoff position which operates a sensor element (30) of a torque switchoff arrangement, characterised in that the second bearing (10) is anchored in the gearbox (9) immovable radially to the longitudinal axis of the intermediate shaft (12), such that the intermediate shaft (12) is tilted in its switchoff position around the second bearing (10) in relation to the initial position, and that the sensor element (30) gives out a signal to switch off the motor when the intermediate shaft (12) makes the tilting movement.

2. A screw device according to claim 1, characterised in that the movement of the first bearing (20) radial to the longitudinal axis of the intermediate shaft (12) is limited by an adjustment device (15).

3. A screw device according to claim 2, characterised in that the first bearing (20) is arranged displaceably in a groove (16), and in the initial position rests against a side wall of the groove (16).

4. A screw device according to one of claims 1 to 3, characterised in that the sensor element is a switch (30).

5. A screw device according to one of claims 1 to 3, characterised in that the sensor element is a piezo indicator.

6. A screw device according to one of claims 1 to 3, characterised in that the sensor element is a reverberation sensor.

7. A screw device according to one of claims 1 to 3, characterised in that the sensor element is an inductive or a capacitive path sensor.

## Revendications

1. Appareil de vissage commandé par moteur et comportant un système de réglage pour le couple de serrage maximal, avec déclenchement, appareil qui se présente en particulier sous la forme d'un outil électroportatif, comprenant un dispositif d'entraînement (2), une broche de travail (7) et un engrenage prévu entre eux et qui possède un carter d'engrenage (9) et un arbre intermédiaire (12) monté en deux paliers (10, 20) placés à distance l'un de l'autre, l'arbre intermédiaire (12) étant déplaçable depuis une position de départ à une position de déclenchement, où est actionné un élément détecteur (30) d'un système de déclenchement pour arrêter l'application d'un couple de serrage, du fait qu'un premier palier (1) de l'arbre intermédiaire est déplaçable radialement par rapport à l'axe longitudinal de l'arbre à l'encontre d'une force entagoniste, caractérisé en ce que le second palier (10) est disposé fixe dans le carter d'engrenage (9), dans le sens radial par rapport à l'axe longitudinal de l'arbre intermédiaire (12), de sorte que l'arbre intermédiaire (12) à la position de déclenchement est incliné autour du second palier (10), et que l'élément détecteur (30), lors du mouvement d'inclinaison de l'arbre intermédiaire (12), délivre un signal pour l'arrêt du moteur.

2. Appareil selon la revendication 1, caractérisé en ce que le mouvement du premier palier (20), radialement par rapport à l'axe longitudinal de l'arbre intermédiaire (12), est limité par un dispositif de réglage (15).

3. Appareil selon la revendication 2, caractérisé en ce que le premier palier (20) est disposé mobile dans une rainure (16) du dispositif de réglage (15) et est appliqué contre un flanc de la rainure (16) à la position de départ.

4. Appareil selon une des revendications 1 à 3, caractérisé en ce que l'élément détecteur est un interrupteur (30).

5. Appareil selon une des revendications 1 à 3, caractérisé en ce que l'élément détecteur est un capteur piézoélectrique.

6. Appareil selon une des revendications 1 à 3, caractérisé en ce que l'élément détecteur est une sonde de Hall.

7. Appareil selon une des revendications 1 à 3, caractérisé en ce que l'élément détecteur est un capteur de déplacement inductif ou capacitif.

# Fig.1

0182986

Fig.2

Fig.3

7